# EUROPÄISCHE PATENTSCHRIFT

(11) **EP 0 875 439 B1**
(45) Veröffentlichungstag und Bekanntmachung des Hinweises auf die Patenterteilung: **02.05.2001**
(21) Anmeldenummer: 98104211.2
(22) Anmeldetag: 10.03.1998
(51) Int. Cl.: B62D 1/18

(54) **Spann- und Klemmvorrichtung**
Tensioning and clamping device
Dispositif de tension et de serrage

(30) Priorität: 29.04.1997 DE 19718031
(43) Veröffentlichungstag der Anmeldung: 04.11.1998
(73) Patentinhaber: ETABLISSEMENT SUPERVIS, FL-9490 Vaduz (LI)
(72) Erfinder: Christian, Lutz, Ing., 6714 Nüziders (AT)
(74) Vertreter: Hefel, Herbert, Dipl.-Ing.

(56) Entgegenhaltungen:
- EP-A- 0 600 700

## Beschreibung

Die Erfindung bezieht sich auf eine Spann- und Klemmvorrichtung mit den Merkmalen gemäß Oberbegriff von Anspruch 1.

Eine Spann- und Klemmeinrichtung dieser Art ist beispielsweise der EP 0 600 700 B1 zu entnehmen. Die hier vorgesehene Rollbahn besitzt drei Abschnitte, nämlich einen ersten Abschnitt, auf der der Rollkörper bei ungeklemmter Stellung ruht, einen zweiten Abschnitt, der innerhalb der Rollbahn einen Kulminationspunkt darstellt, der vom Rollkörper bei der Betätigung des Betätigungshebels überfahren werden muß, und einen dritten Bereich, der als Rastbereich bei geklemmter Stellung dient. Die Auflagefläche dieses Rastbereiches liegt tiefer als der Kulminationspunkt, so daß beim Übergang von der ungeklemmten in die geklemmte Stellung die höchstmöglich erreichbare Spannkraft nach dem Erreichen des Kulminationspunktes wieder abfällt, wenn der Rollkörper in seine Raststellung gelangt, so daß ein Teil der Spannkraft verloren geht.

Auch die EP 0 493 181 B1 zeigt und beschreibt eine Spann- und Klemmvorrichtung dieser Art. Hier sind als Rollkörper jeweils Kugelpaare vorgesehen, die in Bohrungen des Betätigungsgliedes liegen, das zwischen zwei Widerlagern verschwenkbar ist. Die Rollkörper laufen auch hier auf Rollbahnen ab, die nach Art von Schraubenflächen ausgebildet sind, wenn das Betätigungsglied verschwenkt wird. In der Spann- oder Klemmstellung liegen diese Rollkörper in Vertiefungen der Rollbahn, so daß hier eben jener nachteilige Effekt auftritt, der vorstehend geschildert worden ist.

Ausgehend von diesem Stand der Technik zielt die Erfindung darauf ab, die bekannten Spann- und Klemmvorrichtungen weiter zu entwickeln, so daß, wenn das Betätigungsglied in seine Spann- und Klemmstellung verschwenkt ist, auch das höchstmögliche Maß an Spann- bzw. Klemmkraft erreicht ist. Die Erfindung schlägt zur Lösung die Merkmale des Anspruchs 1 vor.

Ein Ausführungsbeispiel der Erfindung wird anhand der Zeichnung näher beschrieben, ohne dadurch die Erfindung auf das gezeigte Ausführungsbeispiel einzuschränken. Es zeigen:
- Fig. 1: die Spann- und Klemmvorrichtung in Ansicht;

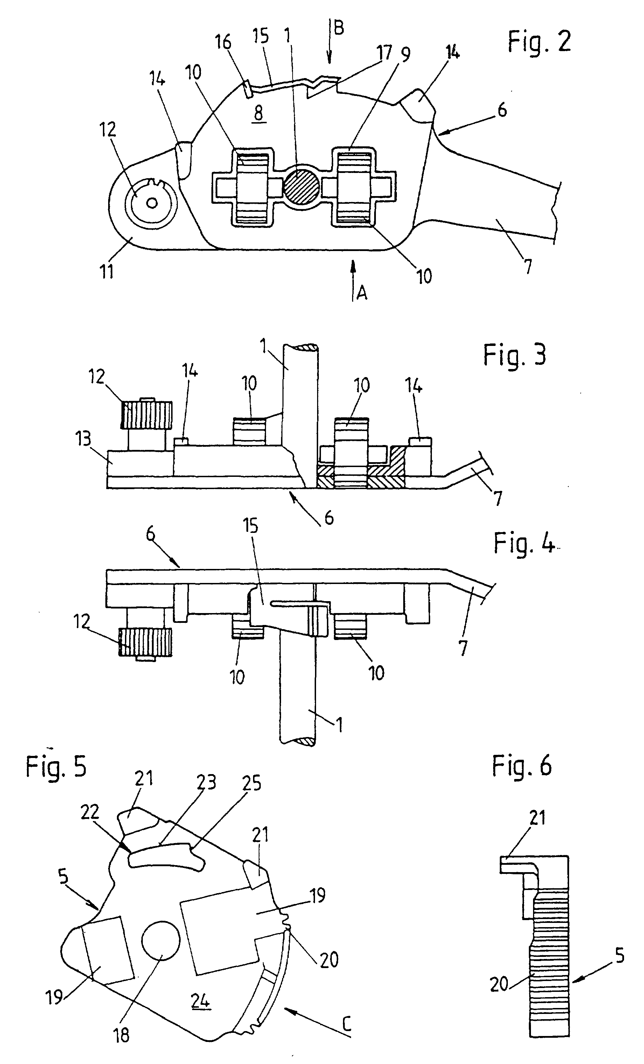

- Fig. 2: das Betätigungsglied in Ansicht;
- Fig. 3: in Seitensicht - Blickrichtung Pfeil A in Fig. 2;
- Fig. 4: in Seitensicht - Blickrichtung Pfeil B in Fig. 2;
- Fig. 5: die Ansicht des zweiten Widerlagers und
- Fig. 6: dessen Seitensicht, Blickrichtung Pfeil C in Fig. 5;
- die Fig. 7 und 8: jeweils eine Ansicht des Betätigungsgliedes wie in Fig. 1, jedoch mit eingezeichneter Lage des Nockens in den beiden Einstellungen des Betätigungsgliedes;
- Fig. 9: eine Ansicht des zweiten Widerlagers und des Betätigungsgliedes - Blickrichtung Pfeil D in Fig. 1;
- Fig. 10: ein Detail;
- Fig. 11: ein Detail aus Fig. 7 als Ausführungsvariante.

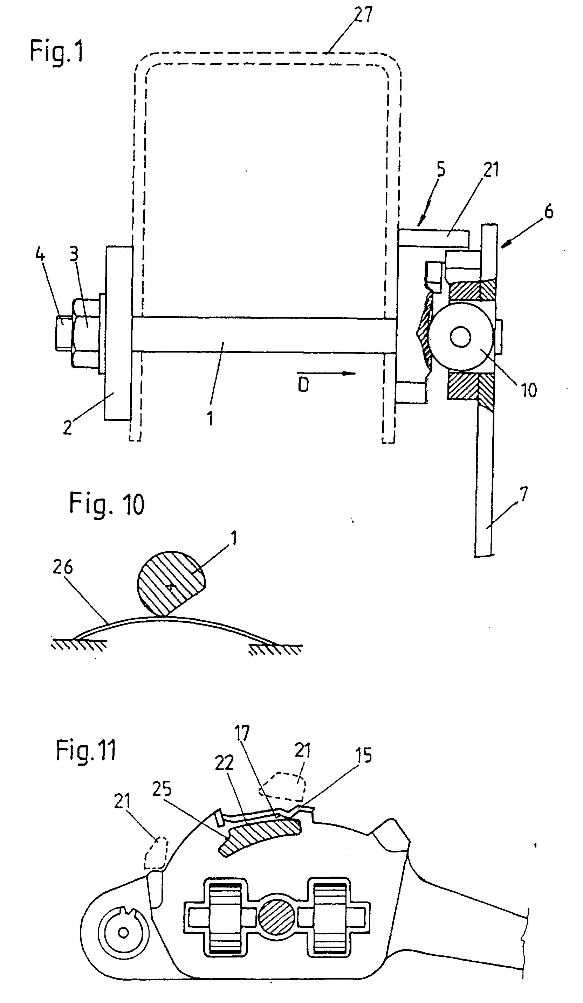

Die in Fig. 1 gezeigte Spann- und Klemmvorrichtung besitzt einen Schaft 1. Am einen Ende des Schaftes 1 ist ein Widerlager 2 festgelegt, beispielsweise über eine Mutter 3, die auf das endseitige Gewinde dieses Schaftes 1 aufgeschraubt und hier gesichert ist. Distanziert von diesem Widerlager 2 ist ein zweites Widerlager 5 vorgesehen, das vom Schaft 1 durchsetzt ist, und zwar mit geringem Spiel, so daß der Schaft 1 gegenüber diesem Widerlager 5 verdrehbar ist. Mit diesem Widerlager 5 wirkt ein Betätigungsglied 6 mit einem Betätigungshebel 7 zusammen, wobei dieses Betätigungsglied 6 im gezeigten Ausführungsbeispiel verdrehsicher mit dem Schaft 1 verbunden ist.

Dieses Betätigungsglied 6 besitzt in der dem benachbarten zweiten Widerlager 5 zugewandten Fläche 8 zwei bezüglich des Schaftes 1 symmetrisch liegende Vertiefungen 9, in welchen frei drehbar gelagert zylindrische Rollkörper 10 liegen, die hier als zylindrische Walzen ausgebildet sind, wobei diese Anordnung so ausgebildet ist, daß diese Rollkörper 10 die Fläche 8 etwas überragen. Die Achsen der beiden Walzen 10 liegen in einer Flucht und schneiden die Achse des Schaftes 1. An einem seitlich auskragenden Abschnitt 11 des Betätigungsgliedes 6 ist ein Zahnrad 12 ortsfest gelagert, das Teil einer hydraulischen Dämpfungs- bzw. Bremseinrichtung 13 ist. Dieses Betätigungsglied 6 besitzt auch randseitig zwei höckerartige Anschläge 14. Im Umfangsbereich des Betätigungsgliedes 6 und hier zwischen den beiden Anschlägen 14 ist eine Blattfeder 15 mit ihrem einen Ende 16 festgelegt. Diese Blattfeder 15 weist eine parallel zur Achse des Schaftes 1 verlaufende und gegen die Achse gerichtete, keilartige Verformung 17 auf.

Das scheibenförmige Widerlager 5 besitzt eine Bohrung 18, durch welche der Schaft 1 mit Spiel gesteckt ist. Zu beiden Seiten dieser Bohrung 18 sind nach Art von Schraubenflächen verlaufende Rollbahnen 19 ausgeformt. Auf einem Teil des Umfanges, der hinsichtlich seiner Erstreckung dem Verschwenkwinkel des Betätigungsgliedes 6 entspricht, ist eine Stirnverzahnung 20 vorgesehen. Des weiteren sind hier am zweiten Widerlager 5 gegenüber diesem seitlich auskragende Klauen 21 angeformt. An der die Rollbahnen 19 aufweisende Fläche ist noch ein gegenüber dieser Fläche 24 auskragender Nocken 22 angeformt, dessen äußere, in Umfangsrichtung verlaufende Begrenzungsfläche 23 spiralförmig gestaltet ist. Die Abmessungen dieses Nockens 22 und die der Feder 15 bzw. deren Lage zueinander sind so gewählt, daß diese Feder 15 bzw. ein Teil derselben in den Hüllkreis der spiralförmig verlaufenden Begrenzungsfläche 23 des Nockens 22 ragt.

Bei ordnungsgemäßem Zusammenbau der Spann- und Klemmvorrichtung liegt die Fläche 8 des Betätigungsgliedes 6 der Fläche 24 des zweiten Widerlagers 5 gegenüber, wobei die Klauen 21 zwischen den Anschlägen 14 des Betätigungsgliedes 6 liegen. Die Rollkörper 10 liegen an den Rollbahnen 19 auf.

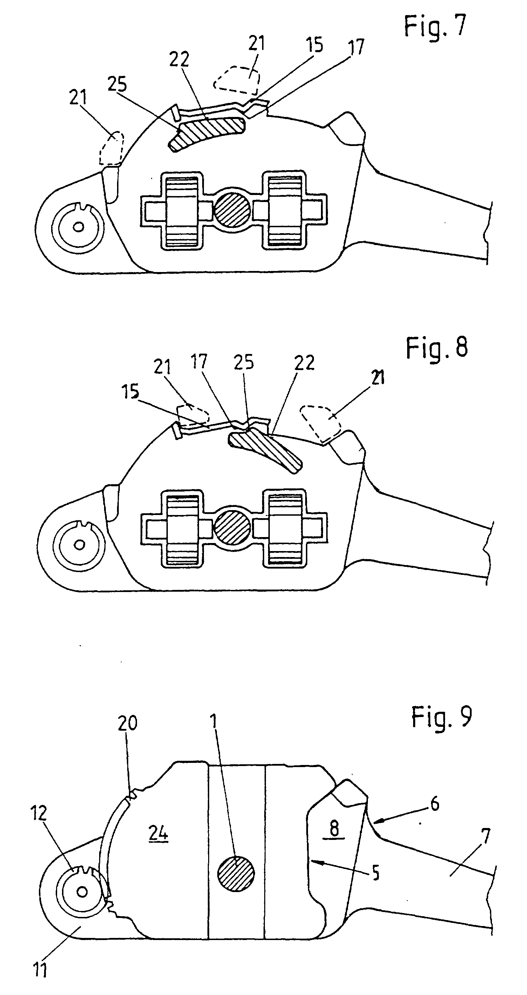

Fig. 7 zeigt nun die relative Lage der Feder 15 und des Nockens 22 zueinander, wenn die Spann- und Klemmvorrichtung ungeklemmt ist, wenn sie gelöst ist. Die Feder 15 ist hier vom Nocken 22 etwas distanziert, wenn die Raste gelöst ist. Es ist aber auch möglich, diese Anordnung so zu gestalten, daß auch bei gelöster Raste die Feder 15 gegebenenfalls unter Vorspannung am Nocken 22 anliegt, was Fig. 11 schematisch veranschaulicht. Durch die relative Verdrehung von Feder 15 und Nocken 22 wird die Feder 15 radial ausgelenkt und dabei gespannt. Dabei kann die Feder 15 über die ganze Länge des Nockens 22 an diesem anliegen oder nur über einen geringen Teil der Länge des Nockens. Je nach konstruktiver Ausgestaltung werden dadurch die Kräfteverhältnisse beim Verschwenken der Teile gegeneinander beeinflußt.

Um die Spann- und Klemmvorrichtung zu aktivieren, wird mit dem Betätigungshebel 7 das Betätigungsglied 6 gegenüber dem stillstehenden zweiten Widerlager 5 verschwenkt, wobei die Rollkörper 10 in bekannter Weise auf den schraubenflächenartigen Rollbahnen 19 hochlaufen. Dabei gelangt der Nocken 22 in den Bereich der Feder 15 und die keilartige Verformung 17 der Feder 15 in den Hüllkreis dieses Nockens 22, wodurch die Feder 15 etwas angehoben wird, sie wird radial nach außen ausgelenkt, bis die Begrenzungsfläche 23 des Nockens 22 zur Gänze die keilartige Verformung 17 der Feder 15 überfahren hat (Fig. 8), worauf die Feder 15 radial nach innen zurückspringt und nun die Rückdrehung des einen Teiles gegenüber dem anderen als Raste verhindert. Die Klauen 21 haben dann ihre eine Endstellung erreicht. In den Figuren 7 und 8 sind diese Klauen und ihre jeweilige Stellung durch strichlierte Linien eingetragen. Durch die erwähnte Verschwenkung der Teile relativ zueinander vergrößern das Betätigungsglied 6 und das Widerlager 5 ihren axialen Abstand durch das Hochlaufen der Rollkörper an den schraubenflächenartigen Rollbahnen.

Bei dieser Verschwenkung der Teile relativ zueinander wird das Zahnrad 12 durch die Stirnverzahnung 20 angetrieben. Dieses Zahnrad 12 steht mit einer hydraulischen Dämpfungs- bzw. Bremseinrichtung 13 in Wirkverbindung, so daß das Betätigungsglied 6 mittels des Betätigungshebels 7 gegen eine stets gleichmäßig wirkende Kraft verschwenkbar ist.

Soll die Spann- und Klemmvorrichtung gelöst werden, so wird mittels des Betätigungshebels 7 das Betätigungsglied 6 in seine ursprüngliche Stellung zurückgeschwenkt, wobei durch die schräge Schulter 25 des Nockens 22 die Feder 15 angehoben und in der Folge somit die Raste gelöst wird.

Beim gezeigten Ausführungsbeispiel liegt die Feder 15 von der Achse des Schaftes 1 aus gesehen außerhalb des Nockens 22. Es liegt im Rahmen der Erfindung, die Feder nach innen zu legen, so daß sie von der Achse des Schaftes 1 aus gesehen einen geringeren radialen Abstand besitzt als der Nocken 22. Der Nocken ist dann seiner beschriebenen Funktion gemäß zu formen. Sind beim beschriebenen Ausführungsbeispiel die Rollkörper im Betätigungsglied 6 gelagert, so ist es möglich, diese auch im Widerlager 5 unterzubringen und dann die Rollbahnen für diese Rollkörper im Betätigungsglied 6 anzuordnen. Anstelle einer sich in Umfangsrichtung erstreckenden und mit ihrem Ende 16 am Betätigungsglied 6 fixierten Blattfeder 15 kann auch eine in radialer Richtung wirkende Feder vorgesehen werden, die evtl. über ein zwischengeschaltetes Glied (Kugel) als Rastenteil ausgebildet ist.

Die schraubenflächenartigen Rollbahnen können in sich etwas gewunden sein, so daß die Berührungsstellen zwischen Rollkörper und Rollbahn bei der relativen Verschwenkung von Betätigungsglied 6 und Widerlager 5 zueinander auf einer Spirale liegen, deren Achse der Schaft 1 bildet. Diese Verwindung der Rollbahn ist dabei so ausgebildet, daß die Rollkörper in der Spann- bzw. Klemmstellung am Ende ihres Abrollweges möglichst nahe dem Schaft 1 liegen und sich beim Lösen der Spann- und Klemmvorrichtung in eine von der erwähnten Achse weiter entfernte Stellung begeben. Das Ausmaß dieser Verwindung ist sehr klein und in der Zeichnung nicht dargestellt.

Die strichlierte Linie 27 in Fig. 1 deutet einen U-förmigen Bauteil an, der beispielsweise Teil einer verstellbaren Lenksäule eines Kraftfahrzeuges sein kann, wie dies auch in den eingangs erwähnten Druckschriften dargestellt und beschrieben ist. Zwischen den beiden Widerlagern 2 und 5 und den Wangen des angedeuteten U-förmigen Bauteiles können noch Federpakete angeordnet sein. Der Schaft 1 ist zweckmäßigerweise als Dehnschraube ausgebildet. Im beschriebenen Ausführungsbeispiel ist das Betätigungsglied 6 mit dem Schaft 1 drehfest verbunden. Es ist auch möglich, den Querschnitt des Schaftes 1 abschnittsweise abzuflachen und an diesem abgeflachten Abschnitt eine Feder 26 anzulegen (Fig. 10), die die Verschwenkbewegung des Betätigungshebels 7 wenigstens auf einem Teil seines Schwenkweges unterstützt. Fig. 10 veranschaulicht dies schematisch.

Wesentlich für die Erfindung ist die in radialer Richtung wirkende Raste, die die Lage der relativ zueinander verschwenkbaren Teile in deren Spann- und Klemmstellung fixiert. Die Kraft für die Überwindung der Raste wird nur über den Betätigungshebel 7 aufgebracht. Die von der Raste ausgeübte Haltekraft hat auf die Spannkraft der Spann- und Klemmvorrichtung keinen Einfluß.

### Legende zu den Hinweisziffern:

- 1: Schaft
- 2: Widerlager
- 3: Mutter
- 4: Gewinde Verformung
- 5: Widerlager
- 6: Betätigungsglied
- 7: Betätigungshebel
- 8: Fläche
- 9: Vertiefung
- 10: Rollkörper - Walze
- 11: Abschnitt
- 12: Zahnrad
- 13: hydraulische Dämpfungs- oder Bremseinrichtung
- 14: Anschlag
- 15: Blattfeder
- 16: Ende
- 17: keilartige

- 18: Bohrung
- 19: Rollbahn
- 20: Stirnverzahnung
- 21: Klaue
- 22: Nocken
- 23: Begrenzungsfläche
- 24: Fläche
- 25: schräge Schulter
- 26: Feder
- 27: strichlierte Linie

## Patentansprüche

1. Spann- und Klemmvorrichtung mit einem Schaft (1), an dessen einem Ende ein erstes Widerlager (2) angeordnet ist und davon distanziert ein zweites Widerlager (5) am Schaft (1) gelagert ist, mit welchem ein um die Achse des Schaftes (1) verschwenkbares Betätigungsglied (6) in Wirkverbindung steht, wobei an einer der einander zugewandten Flächen (8, 24) des zweiten Widerlagers (5) oder des Betätigungsgliedes (6) nach Art von Schraubenflächen verlaufende Rollbahnen (19) für Rollkörper (10), insbesondere zylindrische Walzen, vorgesehen sind, die im Widerlager (5) oder Betätigungsglied (6) frei drehbar gelagert sind, und zwischen den beiden Widerlagern (2, 5) die zu klemmenden bzw. spannenden Bauteile liegen und das Betätigungsglied (6) aus einer Spann- und Klemmstellung in eine Freigabestellung bzw. umgekehrt verschwenkbar ist, dadurch gekennzeichnet, daß das zweite Widerlager (5) und das Betätigungsglied (6) zumindest in einer der beiden Stellungen, vorzugsweise in der klemmenden Stellung, durch mindestens eine in radialer Richtung bezogen auf die Achse des Schaftes (1) wirkende Raste (15, 22) gehalten sind.

2. Spann- und Klemmvorrichtung nach Anspruch 1, dadurch gekennzeichnet, daß an einer der einander zugewandten Flächen (8, 24) des zweiten Widerlagers (5) oder des Betätigungsgliedes (6) ein gegen die andere Fläche axial vorspringender Nocken (22) vorgesehen ist, dessen in Umfangsrichtung verlaufende Begrenzungsfläche (23) spiralartig verläuft, und an der anderen Fläche (8) eine gegen diese spiralartig verlaufende Begrenzungsfläche (23) gerichtete Feder (15) vorgesehen ist, wobei die Feder (15) bzw. ein Teil derselben in den Hüllkreis der spiralartig verlaufenden Begrenzungsfläche (23) des Nockens (22) ragt.

3. Spann- und Klemmvorrichtung nach Anspruch 2, dadurch gekennzeichnet, daß die der Achse des Schaftes (1) abgewandte Begrenzungsfläche (23) des Nockens (22) spiralartig verläuft.

4. Spann- und Klemmvorrichtung nach Anspruch 2, dadurch gekennzeichnet, daß die Bogenlänge des Nockens (22) ca. 40° beträgt.

5. Spann- und Klemmvorrichtung nach Anspruch 2, dadurch gekennzeichnet, daß die Feder (15) als Blattfeder ausgebildet ist und diese Blattfeder eine parallel zur Achse des Schaftes (1) verlaufende, gegen den Nocken (22) gerichtete, keilartige Verformung (17) aufweist.

6. Spann- und Klemmvorrichtung nach einem der Ansprüche 1 bis 5, dadurch gekennzeichnet, daß am Umfang des zweiten Widerlagers (5) bzw. des Betätigungsgliedes (6), und zwar zumindest über die dem Verstellweg des Betätigungsgliedes (6) entsprechende Bogenlänge, eine Stirnverzahnung (20) vorgesehen ist, die mit einem am Betätigungsglied (6) bzw. am zweiten Widerlager (5) ortsfest angeordneten Zahnrad (12) kämmt.

7. Spann- und Klemmvorrichtung nach Anspruch 6, dadurch gekennzeichnet, daß das Zahnrad (12) Teil eines hydraulischen Dämpfungs- bzw. Bremsgliedes (13) ist.

8. Spann- und Klemmvorrichtung nach Anspruch 1 oder 6, dadurch gekennzeichnet, daß der Verstellweg des Betätigungsgliedes (6) durch Anschläge (14) begrenzt ist.

9. Spann- und Klemmvorrichtung nach Anspruch 8, dadurch gekennzeichnet, daß die den Schwenkwinkel des Betätigungsgliedes (6) begrenzenden Anschläge (14) bzw. Teile desselben durch am zweiten Widerlager (5) vorgesehene, axial gegenüber diesem auskragende Klauen (21) gebildet sind.

10. Spann- und Klemmvorrichtung nach einem der Ansprüche 1 bis 9, dadurch gekennzeichnet, daß der die Widerlager verbindende Schaft (1) zumindest auf einem Teil seiner Länge einen Querschnitt mit einem abgeflachten, umfangsseitigen Abschnitt aufweist, an dem eine vorzugsweise vorgespannte Feder (26) anliegt (Fig. 10).

11. Spann- und Klemmvorrichtung nach Anspruch 2, dadurch gekennzeichnet, daß die Feder (15) in jeder Stellung des Betätigungsgliedes (6) am Nocken (22) bzw. dessen Begrenzungsfläche (23) anliegt.

12. Spann- und Klemmvorrichtung nach Anspruch 1 oder 2, dadurch gekennzeichnet, daß die Feder (15) auch bei gelöster Raste vorgespannt ist.

13. Spann- und Klemmvorrichtung nach Anspruch 2 oder 3, dadurch gekennzeichnet, daß die Begrenzungsfläche (23) des Nockens (22) eine dellenartige Vertiefung oder eine schräge Schulter (25) aufweist, in oder an welcher die Feder (15) in Raststellung liegt.

## Claims

1. A tensioning and clamping device with a shaft (1), at one end of which a first abutment (2) is arranged and a second abutment (5) is mounted spaced therefrom on the shaft (1) to which an actuating member (6) pivotable about the axis of the shaft (1) is operatively connected, wherein roller paths (19) - extending in the manner of helical faces - for roller members (10), in particular cylindrical rollers, which are mounted freely rotatably in the second abutment (5) or the actuating member (6), are provided on one of the mutually facing faces (8, 24) of the abutment (5) or actuating member (6), and the components to be clamped or tensioned are arranged between the two abutments (2, 5) and the actuating member (6) is pivotable from a tensioning and clamping position into a release position or *vice versa*, **characterized in that** the second abutment (5) and the actuating member (6) are held in at least one of the two positions, preferably in the clamping position, by at least one catch (15, 22) acting in the radial direction with respect to the axis of the shaft (1).

2. A tensioning and clamping device according to Claim 1, **characterized in that** one of the mutually facing faces (8, 24) of the second abutment (5) or the actuating member (6) has provided thereon a cam (22) which projects axially towards the other face and of which the boundary face (23) extending in the peripheral direction extends in the manner of a spiral, and a spring (15) orientated towards the said boundary face (23) extending in the manner of a spiral is provided on the other face (8), wherein the spring (15) or part thereof projects into the enveloping circle of the boundary face (23) of the cam (22) extending in the manner of a spiral.

3. A tensioning and clamping device according to Claim 2, **characterized in that** the boundary face (23) of the cam (22) remote from the axis of the shaft (1) extends in the manner of a spiral.

4. A tensioning and clamping device according to Claim 2, **characterized in that** the curve length of the cam (22) amounts to approximately 40°.

5. A tensioning and clamping device according to Claim 2, **characterized in that** the spring (15) is constructed in the form of a leaf spring and this leaf spring has a wedge-like deformation (17) extending parallel to the axis of the shaft (1) and orientated towards the cam (22).

6. A tensioning and clamping device according to one of Claims 1 to 5, **characterized in that** a radial serration (20), which meshes with a toothed wheel (12) arranged stationary on the actuating member (6) or on the second abutment (5), is provided on the periphery of the second abutment (5) or the actuating member (6), namely at least over the curve length corresponding to the displacement path of the actuating member (6).

7. A tensioning and clamping device according to Claim 6, **characterized in that** the toothed wheel (12) is part of an hydraulic damping or braking member (13).

8. A tensioning and clamping device according to Claim 1 or 6, **characterized in that** the displacement path of the actuating member (6) is bounded by stops (14).

9. A tensioning and clamping device according to Claim 8, **characterized in that** the stops (14), or parts thereof, bounding the pivoting angle of the actuating member (6) are formed by claws (21) provided on the second abutment (5) and projecting axially with respect thereto.

10. A tensioning and clamping device according to one of Claims 1 to 9, **characterized in that** at least part of the length of the shaft (1) connecting the abutments has a crosssection with a flattened peripheral portion against which a preferably pre-stressed spring (26) rests (Fig. 10).

11. A tensioning and clamping device according to Claim 2, **characterized in that** in each position of the actuating member (6) the spring (15) rests against the cam (22) or the boundary face (23) thereof.

12. A tensioning and clamping device according to Claim 1 or 2, **characterized in that** the spring (15) is pre-stressed even when the catch is released.

13. A tensioning and clamping device according to Claim 2 or 3, **characterized in that** the boundary face (23) of the cam (22) has a dent-like depression or an oblique shoulder (25), in or on which the spring (15) rests in the rest position.

## Revendications

1. Dispositif de serrage et de pincement, dans lequel :
- une tige (1) porte à une extrémité un premier palier de butée (2) et à une certaine distance de celui-ci, un second palier de butée (5) avec lequel est en interaction un organe de manoeuvre (6) pouvant basculer autour de l'axe de la tige (1),
- sur une des deux faces tournées l'une vers l'autre (8, 24) du second palier de butée (5) ou de l'organe de manoeuvre (16), sont prévues des pistes de roulement (19) du genre portées de vis, pour des galets (10), en particulier des galets cylindriques montés en rotation libre dans le palier (5) ou l'organe de manoeuvre (6), et
- les pièces à serrer ou à pincer sont placées entre les deux paliers (2, 5), et l'organe de manoeuvre (6) peut basculer pour passer d'une position de serrage et pincement à une position de liberté et inversement,
caractérisé en ce que
le second palier (5) et l'organe de manoeuvre (6), dans au moins une des deux positions, de préférence dans celle de serrage, sont maintenus par au moins un organe de blocage (15, 22) agissant en direction radiale par rapport à l'axe de la tige (1).

2. Dispositif selon la revendication 1,
caractérisé en ce que
sur une des faces tournées l'une vers l'autre (8, 24) du second palier (5) ou de l'organe de manoeuvre (6), il est prévu une came (22) faisant saillie axialement vers la face opposée et ayant en direction périphérique une surface limite (23) en forme de spirale, tandis qu'il est prévu sur l'autre face (8) un ressort (15) dirigé vers cette surface limite en spirale (23), ce ressort (15) ou une partie de celui-ci pénétrant dans le cercle constituant l'enveloppe de la surface limite en forme de spirale (23) que présente la came (22).

3. Dispositif selon la revendication 2,
caractérisé en ce que
la surface limite (23) de la came (22) située à l'opposé de l'axe de la tige (1) a la forme d'une spirale.

4. Dispositif selon la revendication 2,
caractérisé en ce que
l'amplitude de l'arc de la came (22) est d'environ 20°.

5. Dispositif selon la revendication 2,
caractérisé en ce que
le ressort (15) est un ressort à lame et présente une déformation (17) en forme de coin, parallèle à l'axe de la tige (1) et dirigée vers la came (22).

6. Dispositif selon l'une quelconque des revendications 1 à 5,
caractérisé en ce qu'
à la périphérie du second palier (5) ou de l'organe de manoeuvre (6) et au moins sur la longueur de l'arc correspondant à la course de déplacement de l'organe de manoeuvre (6), il est prévu une denture droite (20) engrenant avec un pignon (12) monté fixe sur l'organe de manoeuvre (6) ou sur le second palier (5).

7. Dispositif selon la revendication 6,
caractérisé en ce que
le pignon (12) est une partie d'un organe (13) de freinage ou d'amortissement hydraulique.

8. Dispositif selon la revendication 1 ou 6,
caractérisé en ce que la course de déplacement de l'organe de manoeuvre (6) est limitée par des butées (14).

9. Dispositif selon la revendication 8,
caractérisé en ce que
les butées (14) limitant l'angle de basculement de l'organe de manoeuvre (6) ou des parties de celles-ci sont constituées par des griffes (21) portées par le palier (5) et en saillies axiales sur celui-ci.

10. Dispositif selon l'une quelconque des revendications 1 à 9,
caractérisé en ce que
la tige (1) reliant les paliers présente, sur au moins une partie de sa longueur, une section ayant à la périphérie une partie aplatie avec laquelle est en contact un ressort (26) de préférence sous tension (figure 10) .

11. Dispositif selon la revendication 2,
caractérisé en ce que
le ressort (15) dans toute position de l'organe de manoeuvre (6) est appliqué sur la came (22), c'est-à-dire sur sa surface limite (23) .

12. Dispositif selon la revendication 1 ou 2,
caractérisé en ce que
le ressort (15) est précontraint même quand il n'y a pas blocage.

13. Dispositif selon la revendication 2 ou 3,
caractérisé en ce que
la surface limite (23) de la came (22) présente un creux ou un épaulement oblique (25), dans ou le long duquel le ressort (15) s'appuie en position de blocage.
